(19) Europäisches Patentamt

European Patent Office

Office européen des brevets

(11) Numéro de publication : **0 076 710**
**B1**

(12) **FASCICULE DE BREVET EUROPÉEN**

(45) Date de publication du fascicule du brevet :
11.12.85

(21) Numéro de dépôt : **82401448.4**

(22) Date de dépôt : **30.07.82**

(51) Int. Cl.⁴ : **F 16 M 11/38**

(54) **Dispositif de réglage de la position d'un plateau.**

(30) Priorité : 28.09.81 FR 8118247

(43) Date de publication de la demande :
13.04.83 Bulletin 83/15

(45) Mention de la délivrance du brevet :
11.12.85 Bulletin 85/50

(84) Etats contractants désignés :
CH DE GB LI

(56) Documents cités :
FR-A- 1 585 410
US-A- 2 581 023
US-A- 3 350 065

(73) Titulaire : **Dupart, Jean**
**68, rue des Coudraies**
**F-92330 Sceaux (FR)**

(72) Inventeur : **Dupart, Jean**
**68, rue des Coudraies**
**F-92330 Sceaux (FR)**

(74) Mandataire : **Martinet & Lapoux**
**62, rue des Mathurins**
**F-75008 Paris (FR)**

Jouve, 18, rue St-Denis, 75001 Paris, France

## Description

La présente invention concerne un dispositif de réglage de la position d'un plateau comprenant un piètement en croix tel que défini dans le préambule de la revendication 1.

Un tel dispositif est déjà utilisé pour régler la hauteur d'un plateau supportant un projecteur de films ou diapositives ou un siège, ou pour régler la hauteur d'une table à repasser.

Selon le brevet US-A-2 581 023, le piètement du dispositif de réglage comprend deux paires parallèles d'éléments extérieur et intérieur croisés formant jambes. Les extrémités des éléments intérieur et extérieur de chaque paire coulissent en sens inverse dans une même lumière longitudinale et latérale du plateau. Les moyens pour enserrer comprennent un boulon, formant l'axe d'articulation du piètement, qui traverse une entretoise cylindrique pour maintenir écartés les points d'intersection et de pivotement des paires d'éléments. Le plateau peut être alors positionné en hauteur, toujours parallèlement à lui-même en écartant ou rapprochant les éléments intérieurs et extérieurs, ou bien être translaté longitudinalement dans son plan, grâce au coulissement des extrémités supérieures des éléments intérieurs et extérieurs dans les deux lumières longitudinales et latérales du plateau.

Dans d'autres dispositifs de réglage permettant un positionnement en hauteur du plateau, le verrouillage du piètement est obtenu au moyen de deux crémaillères remplaçant lesdites lumières et solidaires du plateau, dans lesquelles est engagée une tige d'articulation aux extrémités supérieures des éléments extérieurs du piètement.

D'autres dispositifs de réglage ayant une structure différente de celles précédemment décrites ne permettent le réglage de l'inclinaison du plateau que par rapport à l'horizontale.

Le but de la présente invention est de fournir un dispositif de réglage de la hauteur ainsi que de l'inclinaison d'un plateau. Dans ces conditions, lorsque le plateau supporte par exemple un projecteur de films, l'angle de projection peut être ajusté pour des hauteurs différentes. De même, si le plateau sert de repose-pieds, la hauteur, mais également l'inclinaison du repose-pieds, peuvent être adaptées à la morphologie de l'utilisateur ainsi qu'au dimensionnement du siège ou de l'ensemble bureau-siège de l'utilisateur.

A cette fin, le dispositif de réglage de la position d'un plateau est caractérisé en ce que chacun des éléments extérieurs et intérieurs possède une lumière longitudinale oblongue traversée à coulissement par l'axe d'articulation.

Les moyens pour enserrer permettent de verrouiller le plateau à la position choisie en hauteur et inclinaison, en bloquant le déplacement relatif des éléments du piètement au niveau de l'axe d'articulation. Les moyens pour enserrer peuvent comprendre un volant solidaire de l'une des extrémités de l'axe d'articulation et un écrou vissé à l'autre extrémité de l'axe d'articulation. Cependant, aux moyens pour enserrer peuvent être substituées ou adjointes des crémaillères le long des lumières des éléments du piètement dans lesquelles engrène l'axe d'articulation.

D'autres caractéristiques et avantages de la présente invention apparaîtront plus clairement à la lecture de la description qui suit de plusieurs modes de réalisation et des dessins annexés correspondants, dans lesquels :

la figure 1 est une vue de côté d'un dispositif de réglage selon l'invention ;

la figure 2 est une vue de face du dispositif de réglage, la plaque-support du plateau étant enlevée ;

la figure 3 est une vue en perspective de l'élément intérieur du piètement en croix du dispositif ;

la figure 4 est une vue en perspective d'un élément ou coulisse extérieure du piètement en croix ;

la figure 5 est un diagramme schématique montrant différentes hauteurs et inclinaisons du plateau d'un dispositif de réglage sans socle inférieur, par rapport à la position initiale montrée à la fig. 1 ;

la figure 6 est une vue de côté analogue à la fig. 1 montrant l'ancrage d'un moyen de rappel élastique tel qu'un câble élastique ; et

la figure 7 est une vue en perspective analogue à la fig. 3 montrant des modifications à apporter à l'élément intérieur du piètement pour tendre le câble élastique.

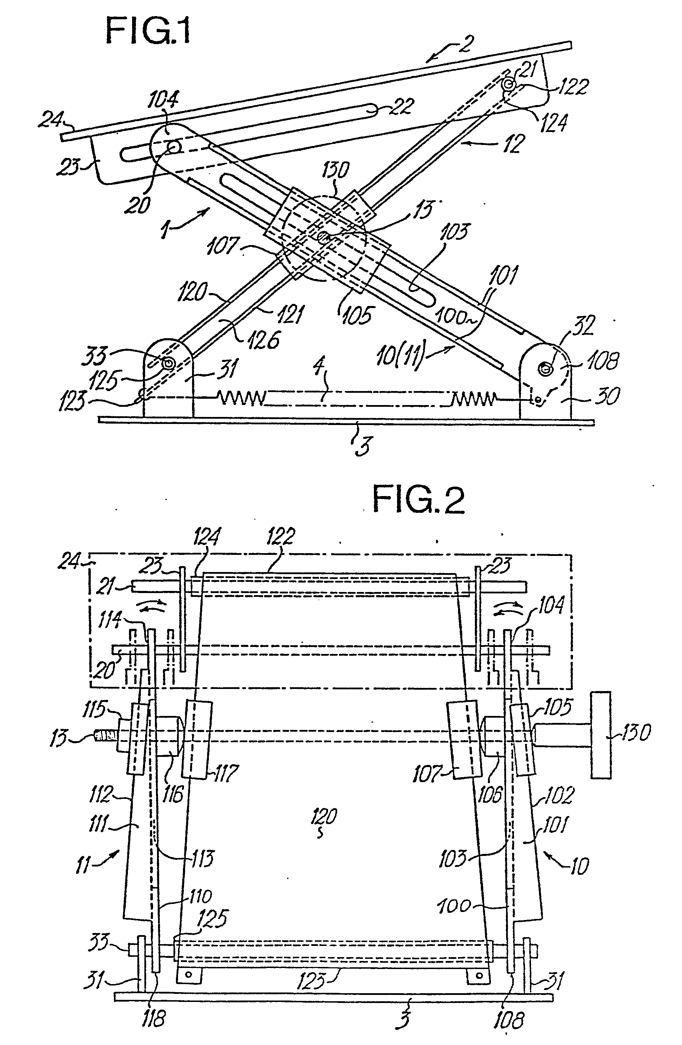

En se référant aux fig. 1 et 2, le dispositif de réglage comprend selon un premier mode de réalisation, un piètement en croix, désigné dans son ensemble par 1, et un plateau 2 supporté par les extrémités supérieures du piètement 1.

Le piètement 1 est composé de deux éléments extérieurs 10, 11 et d'un élément intérieur 12. Les éléments extérieurs 10 et 11 sont des coulisses longilignes latérales qui sont parallèles et qui entretoisent symétriquement l'élément intérieur 12 au niveau d'un axe d'articulation horizontal 13 du piètement en croix.

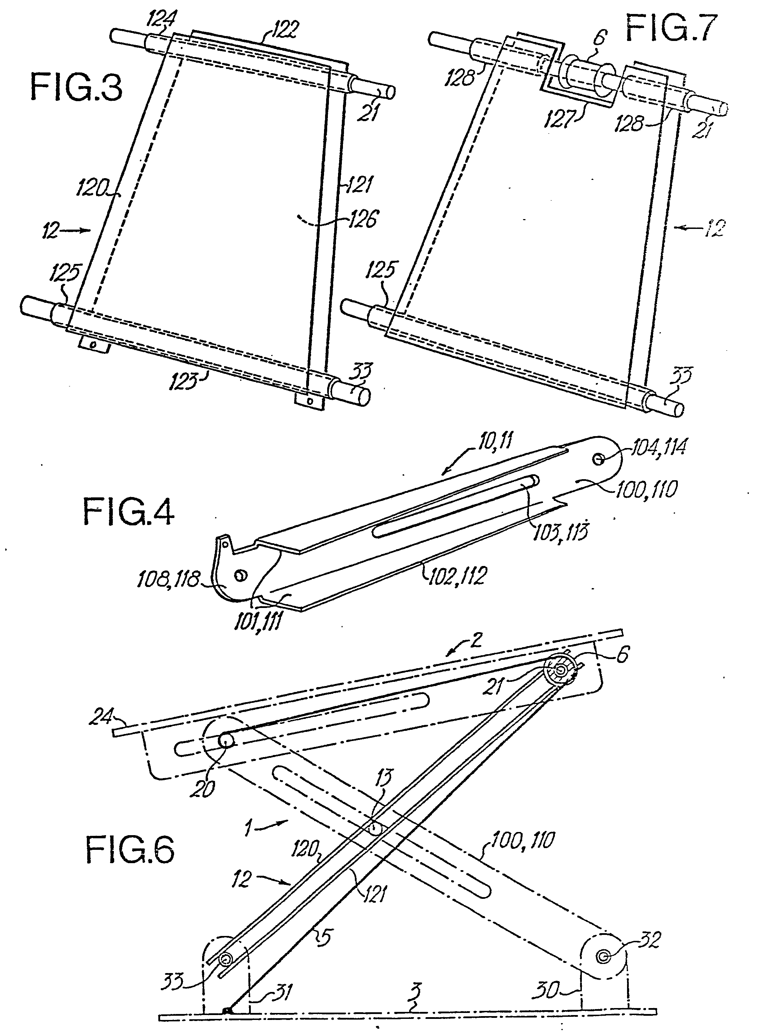

Comme montré à la fig. 3, l'élément intérieur 12 est constitué par deux plaques parallèles identiques 120 et 121. Le profil de découpe des plaques 120 et 121 est un trapèze isocèle. Au voisinage des petits côtés horizontaux supérieurs 122 et des grands côtés horizontaux inférieurs 123 des plaques et entre celles-ci sont soudés respectivement deux tubes horizontaux supérieur 124 et inférieur 125 afin que les plaques 120 et 121 soient solidaires et afin que soit ménagé entre elles un espace de coulissement 126, formant lumière, qui est traversé par l'axe 13.

Comme montré à la fig. 4, chaque coulisse latérale 10, 11 est formée par une plaque longiligne verticale 100, 110 dont les chants longitudinaux sont prolongés par des replis parallèles 101, 111 qui sont repliés à angle droit vers la même face de la plaque 100, 110. Les contours des replis sont pratiquement des triangles rectangles dont les hypothénuses 102, 112 sont les chants longitudinaux des plaques 100, 110.

Comme montré aux fig. 2 et 4, l'axe d'articulation 13 traverse, entre les sommets des petits angles des replis en forme de triangle rectangle, deux lumières oblongues 103 et 113 qui sont pratiquées longitudinalement dans les plaques 100 et 111, respectivement. Les plaques 100 et 110 sont montées verticalement, avec leurs replis respectifs 101, 111 tournés à l'opposé vers l'extérieur du dispositif, et ont leurs extrémités supérieures percées de trous 104, 114 qui sont traversés librement par une tige d'articulation horizontale 20. De même, l'extrémité supérieure de l'élément 12 est montée à rotation autour d'une tige d'articulation longitudinale 21. Cependant, les extrémités de la tige 20 peuvent coulisser dans deux lumières longitudinales 22 qui sont pratiquées à l'une des extrémités de deux nervures 23 verticales, longitudinales et sous-jacentes à la plaque-support 24 du plateau 2, tandis que les extrémités de la tige 21 sont solidaires de l'autre extrémité des nervures 23. Les tiges 20 et 21 sont fixes en position le long de leurs axes entre les deux nervures 23 grâce à des moyens de fixation adéquats connus, tels que vissage, circlips, bagues d'arrêt ou goupilles.

L'axe d'articulation 13 du piètement en croix traverse successivement à partir d'un volant de préhension 130, dit de verrouillage de l'articulation en croix, qui est solidaire de l'une des extrémités de l'axe 13 du côté de l'élément 10, une chape 105, la lumière 103 de l'élément 10, une entretoise 106, une chape 107, l'espace interne 126 entre les plaques 120 et 121 de l'élément 12, une chape 117, une entretoise 116, la lumière 113 de l'élément 11 et une chape taraudée 115. La chape 115 est vissée à l'extrémité correspondante filetée de l'axe 13, tandis que les chapes 105, 107 et 117 ainsi que les entretoises 106 et 116 sont montées à glissement doux autour de l'axe 13.

Comme on le voit sur la fig. 2, le dispositif présente une symétrie par rapport au plan vertical médian aux plaques 120 et 121 de l'élément 12.

Les sections des chapes précitées peuvent être en U comme illustré dans les dessins, afin que les fonds des chapes 105 et 115 d'une part, et des chapes 107 et 117 d'autre part, coulissent respectivement sur les chants sensiblement inclinés par rapport à la verticale des replis 101 et 111 d'une part, et des plaques 120 et 121, d'autre part, et afin que les branches de ces chapes entretoisent à frottement doux les replis 101 et 111 et les plaques 120 et 121, respectivement. Les sections des chapes peuvent être également en T, la branche verticale du T étant entretoisée par les deux replis respectifs 101 ou 111 ou les deux plaques 120 et 121 et les petites branches du T coulissant comme les fonds respectifs des chapes en U selon la variante précédente.

Les entretoises 106 et 116 sont des petits cylindres ayant chacun une base plane verticale et une base analogue à un grain en calotte sphérique. Les bases planes des entretoises 106, 116 sont appuyées respectivement contre les faces des plaques 100, 110, à l'opposé des replis 101, 111. Les grains sphériques des entretoises 106, 116 sont respectivement au contact des faces inclinées externes des chapes 107, 117 afin d'assurer une borne portée de ces chapes contre les chants inclinés des plaques 120, 121 de l'élément central 12. De même, l'extrémité du volant 130 venant au contact de la chape 105 peut être en forme d'un grain sphérique afin que la chape 105 s'appuie convenablement contre les replis 101 de l'élément 10.

Tel que décrit ci-dessous, le dispositif selon l'invention comprend un piètement en trois points d'appui sur le sol constitués par les extrémités inférieures 108, 118 et 123 des éléments 10, 11 et 12, et des moyens de verrouillage de l'articulation en croix du piètement constitués par le volant 130 et la chape 115. Aux extrémités de l'axe 13, le volant 130 et la chape 115 enserrent les chapes, les entretoises, et les éléments du piètement afin de maintenir à une position choisie en hauteur et en inclinaison le plateau 2 par réglage à une position constante de l'axe 13 par rapport aux éléments 10, 11 et 12 et à un angle constant des éléments 10 et 11 par rapport à l'élément 12.

Après avoir desserré la chape 115 par rotation du volant 130, l'axe d'articulation 13 peut coulisser le long des lumières 103, 113 des coulisses 10, 11 et dans l'espace interne 126 entre les tubes 124 et 125 de l'élément 12. Egalement, la tige 20 peut coulisser dans les lumières 22 du plateau 2, et les extrémités supérieures percées 104, 114 des coulisses 10 et 11 peuvent tourner autour de la tige 20 et glisser le long de celle-ci. Les deux positions extrêmes montrées en traits interrompus sur la fig. 2 des extrémités supérieures des coulisses 10, 11 peuvent être délimitées par des bagues d'arrêt solidaires de la tige 20. Le perçage et le taraudage de la chape 115 jouant le rôle d'écrou sont effectués en tenant compte de la pente du grand côté des replis 111 de la coulisse 11, pour une hauteur moyenne de l'axe 13.

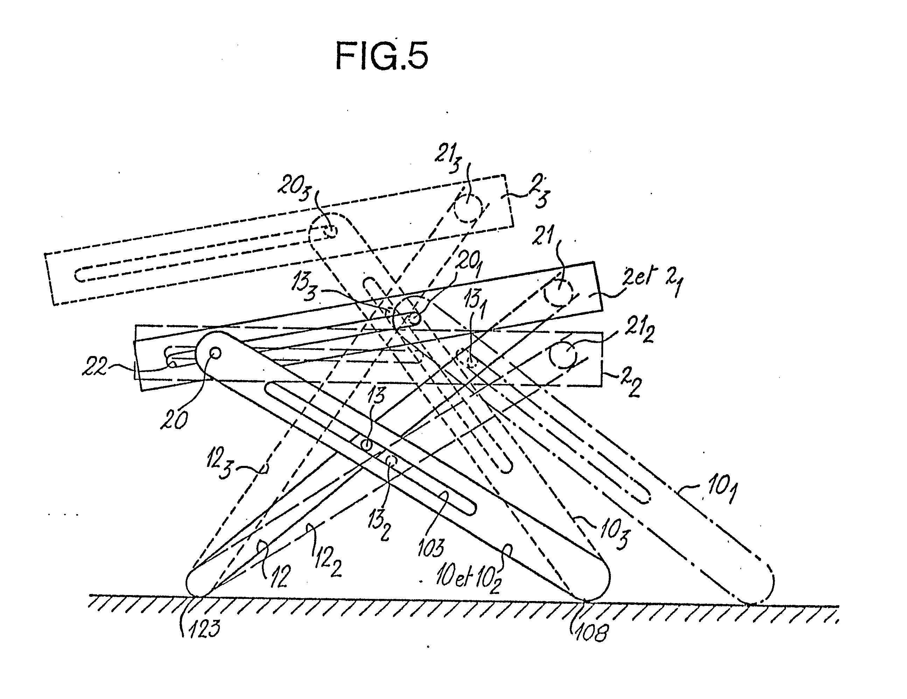

A titre d'exemple, trois positions des éléments principaux du dispositif reposant sur un sol plan sont montrées schématiquement à la fig. 5, selon ce premier mode de réalisation, par rapport à une position initiale telle que celle montrée à la fig. 1. Aux numéros de référence des trois éléments 10, 11 et 12 et des axes d'articulation 13, 20 et 21 sont adjoints respectivement les indices 1, 2 et 3 en correspondance auxdites trois positions qui sont dessinées respectivement en traits mixtes, en traits interrompus longs et en traits interrompus courts. On a supposé dans la fig. 5 que l'extrémité inférieure 123 de l'élément 12 demeure à une position fixe sur le sol.

La première position correspondant à l'indice 1 ne modifie ni l'inclinaison ni la hauteur du plateau 2 par rapport au sol. La tige 20 et l'axe d'articulation 13 sont coulissés vers le haut dans les lumières 22 et l'espace 126. L'extrémité inférieure 123 de l'élément 12 est maintenant plus écartée de celles 108, 118 des éléments 10 et 11. Un tel réglage permet de rechercher une meilleure stabilité du plateau 1 en dépendance de la répartition du poids des objets qu'il supporte, ou de la place disponible sur le sol, ou bien encore de la configuration du sol.

La seconde position correspondant à l'indice 2 modifie l'inclinaison du plateau 2 pour une hauteur déterminée au niveau de la tige 20. Les éléments 10 et 11 sont restés à leur position initiale. Le plateau 1 a pivoté autour de la tige 20 pour venir à l'horizontale par exemple, tandis que l'axe d'articulation 13 a glissé vers le bas dans les lumières 103 et 113 des éléments 10 et 11 en couchant progressivement l'élément 12.

La troisième position correspondant à l'indice 3 modifie la hauteur du plateau 2 pour une inclinaison déterminée. Le plateau 1 a été soulevé parallèlement à la position initiale en remontant l'axe d'articulation 13 dans les lumières 103, 113 des éléments 10, 11 et dans l'espace interne 126 de l'élément 12. La tige 20 a coulissé vers le haut dans les lumières 22 du plateau 2. Les éléments 10 et 11 et l'élément 12 ont pivoté autour des tiges 20 et 21 et leurs extrémités supérieures se sont rapprochées.

Il apparaît ainsi que le plateau 2 peut occuper de très nombreuses positions en inclinaison et en hauteur. Le nombre de ces diverses positions n'est limité que par les longueurs des lumières 103 et 113 des éléments 10 et 11 et de l'espace interne 126 de l'élément 12 pour le glissement de l'axe d'articulation 13 du piètement en croix 1 et par la longueur des lumières 22 du plateau 2. Le plateau est verrouillé à chaque position choisie par vissage de l'axe 13 dans la chape 115 au moyen de la rotation du volant 130. Ce verrouillage contribue à la poussée des chapes 105, 115 contre les chants inclinés des replis 101, 111, des plaques 100, 110 contre les bases planes des entretoises 106, 116, des bases en grains de contact des entretoises 106, 116 contre les chapes 107, 117 et enfin des chapes 107, 117 contre les chants inclinés des plaques 120, 121.

On décrit maintenant un second mode de réalisation qui se distingue du précédent par le fait que les extrémités inférieures des éléments 10 et 11 et de l'élément 12 sont montées à pivotement sur un socle 3 reposant sur le sol ou fixé à celui-ci.

Le socle 3 comporte deux paires de nervures verticales percées 30 et 31 à travers lesquelles passent les extrémités de deux tiges d'articulation 32 et 33 maintenues en position longitudinale par des moyens analogues à ceux correspondant aux tiges 20 et 21. Le tube inférieur 125 de l'élément 12 peut tourner autour de la tige 33 entre les nervures 31 et y est maintenu en position longitudinale par des bagues d'arrêt comme pour le tube supérieur 124 sur la tige 21. Les extrémités inférieures 108, 118 des éléments 10, 11 sont percées et peuvent tourner autour de la tige 32 entre les nervures 30 et glisser librement le long de celle-ci.

La descente et l'orientation du plateau 2 sont progressives lors du desserrage du volant 130 grâce aux pentes des côtés des plaques 120 et 121 en trapèze isocèle de l'élément interne 12 et aux pentes des hypothénuses 102, 112 des éléments externes 10, 11. De par ces dispositions, le dispositif de réglage utilisé en repose-pieds peut également être utilisé comme marchepied en raison de la sécurité présentée.

Un ou plusieurs ressorts de rappel hélicoïdaux sont ancrés aux extrémités inférieures 108, 118 et 123, comme le ressort 4 montré à la fig. 1, ou aux extrémités supérieures 104, 114 et 122 des éléments 10, 11 et 12. L'ancrage de ces ressorts est au-delà des tiges d'articulation 32, 33 ou 20, 21. Ces ressorts permettent le relèvement automatique du plateau 2 lors du desserrage du volant 130.

Le relèvement du plateau 2 peut être également obtenu au moyen d'un ou plusieurs câbles de rappel en caoutchouc élastique, du genre Sandow (marque déposée), tels que celui 5 montré à la fig. 6. En se référant à cette fig. 6 et à la fig. 7, le câble 5 est ancré au socle 3, au voisinage de l'articulation inférieure de l'un des éléments 10, 11 ou 12, par exemple à l'une des nervures 31 supportant la tige d'articulation inférieure 33 de l'élément 12 ou entre ces nervures. Selon l'exemple illustré, le câble 5 longe le dessous de la plaque 121 puis est coudé autour d'une poulie 6 qui est montée folle sur le milieu de la tige supérieure 21. L'autre extrémité du câble 5 est ancrée dessous la plaque-support 24, au voisinage de la tige d'articulation supérieure 20 des autres éléments 10, 11 ou directement au milieu de celle-ci. Comme montré à la fig. 7, dans ce cas, les chants supérieurs 122 des plaques 120 et 121 présentent des entailles centrales 127 pour l'insertion de la poulie 6 et le tube 124 est composé de petits tubes symétriques 128 de part et d'autre de la poulie 6.

L'élément 12 peut être réalisé classiquement par deux tubes inclinés reliés entre eux par des traverses horizontales ou en croix. Dans ce cas, selon le premier mode de réalisation, le piètement repose sur le sol en quatre points d'appui. De même, les éléments 10 et 11 peuvent être constitués par des tubes formant un élément en une seule pièce comme l'élément 12.

Les lumières 22 pour le coulissement de la tige 20 peuvent être remplacées par des lumières analogues dans le plateau 2 pour le glissement guidé de la tige 21 ou bien encore par une crémaillère dans laquelle engrène la tige 20 ; la tige 20 peut être plaquée dans la crémaillère par une lame-ressort fixée sous le plateau 2.

Aux moyens de verrouillage du piètement tels que notamment le volant 130 et la chape 115 peuvent être adjoints ou substitués des crémaillères le long des lumières 103, 113 des éléments 10, 11 et le long des faces en regard des plaques 120, 121 de l'élément 12, dans lesquelles engrène l'axe d'articulation 13 ; l'axe d'articulation 13 peut être alors plaqué dans les crémaillères au moyen de lames-ressorts fixées aux éléments 10, 11 et 12, respectivement.

## Revendications

1. Dispositif de réglage de la position d'un plateau (2) comprenant un piètement en croix (1) ayant deux éléments extérieurs parallèles (10, 11) et au moins un élément intérieur (12) disposé entre les éléments extérieurs et croisant ceux-ci, ainsi que des moyens (130, 115) comprenant un axe fileté d'articulation (13) traversant l'intersection des éléments croisés (10, 11 ; 12) pour enserrer les éléments afin de verrouiller le piètement, les deux éléments extérieurs (10, 11) ayant des extrémités supérieures (104, 114) articulées au plateau (2) et coulissant le long de lumières parallèles (22) du plateau (2), et l'élément intérieur (12) ayant une extrémité supérieure (122) articulée au plateau (2), caractérisé en ce que chacun des éléments extérieurs (10, 11) et intérieur (12) possède une lumière longitudinale oblongue (103, 113 ; 126) traversée à coulissement par l'axe d'articulation (13).

2. Dispositif conforme à la revendication 1, caractérisé en ce que les moyens pour enserrer comprennent un volant (130) solidaire de l'une des extrémités de l'axe d'articulation (13) et un écrou (115) vissé à l'autre extrémité de l'axe d'articulation (13).

3. Dispositif conforme à la revendication 1 ou 2, caractérisé en ce que l'élément intérieur (12) est composé de deux plaques parallèles (120, 121) ayant des extrémités supérieures (122) et inférieures (123) respectivement solidaires afin de ménager entre elles un espace interne de coulissement (126) de l'axe d'articulation (13) formant lumière.

4. Dispositif conforme à la revendication 3, caractérisé en ce que les plaques (120, 121) ont leurs extrémités (122, 123) soudées à deux tubes (124, 125) susceptibles d'être traversés chacun par une tige d'articulation (21, 33) par rapport au plateau (1) ou à un socle (3).

5. Dispositif conforme à l'une des revendications 1 à 4, caractérisé en ce que chacun des éléments extérieurs (10, 11) est composé d'une plaque (100, 110) perpendiculaire à l'axe d'articulation (13) et formant une coulisse longiligne.

6. Dispositif conforme à la revendication 5, caractérisé en ce que les plaques (100, 110) des éléments extérieurs (10, 11) présentent des replis (101, 111) vers l'extérieur, le long de grands chants inclinés desquels coulissent les moyens pour enserrer (130, 115).

7. Dispositif conforme aux revendications 2 et 6, caractérisé en ce que les moyens pour enserrer comprennent une chape (105) disposée entre la plaque de l'un (10) des éléments extérieurs et le volant (130) et en ce que ladite chape (105) et ledit écrou (115) sont guidés à coulissement le long des replis respectifs (101, 111) des plaques (100, 110) des éléments extérieurs (10, 11).

8. Dispositif conforme aux revendications 3 et 7, caractérisé en ce que les moyens pour enserrer comprennent à chacune des extrémités de l'axe d'articulation (13), entre des chants inclinés parallèles des deux plaques (120, 121) dudit élément intérieur (12) et la face sans replis de la plaque (100, 110) de l'un des éléments extérieurs (10, 11), un cylindre (106, 116) tel qu'à base en grain de contact et une chape (107, 117) guidée à coulissement le long desdits chants inclinés.

9. Dispositif conforme à l'une des revendications 1 à 8, caractérisé en ce qu'il comprend un socle (3) et des moyens (32, 33) pour articuler des extrémités inférieures (108, 118 ; 123) des éléments extérieurs (10, 11) et intérieur (12) par rapport au socle (3).

10. Dispositif conforme à la revendication 9, caractérisé en ce qu'il comprend des moyens de rappel élastiques (4, 5) pour rapprocher l'une vers l'autre les extrémités inférieures (108, 118 ; 123) ou supérieures (104, 114 ; 122) des éléments extérieurs (10, 11) et de l'élément intérieur (12).

11. Dispositif conforme à la revendication 10, caractérisé en ce que les moyens de rappel élastiques comprennent au moins un ressort (4) ancré entre les extrémités inférieures (108, 118 ; 123) ou supérieures (104, 114 ; 122) des éléments extérieurs (10, 12) et de l'élément intérieur (12).

12. Dispositif conforme à la revendication 10, caractérisé en ce que les moyens de rappel élastiques comprennent au moins un câble élastique (5) qui est ancré au socle (3), au voisinage d'un axe d'articulation (33 ; 32) de l'extrémité inférieure (123 ; 108, 118) de l'élément intérieur (12) ou des éléments extérieurs (10, 11), et au plateau (2), au voisinage d'un axe d'articulation (20 ; 21) de l'extrémité supérieure (104, 114 ; 122) des éléments extérieurs (10, 11) ou de l'élément intérieur (12) et qui tourne autour de l'axe d'articulation (21 ; 20) de l'extrémité supérieure (122 ; 104, 114) de l'élément intérieur (12) ou des éléments extérieurs (10, 11), respectivement.

13. Dispositif conforme à la revendication 12, caractérisé en ce que le câble élastique (5) tourne autour d'une poulie folle (6) de l'axe d'articulation correspondant (21 ; 20) de l'extrémité supérieure (122 ; 104, 114) de l'élément intérieur (12) ou des éléments extérieurs (10, 11).

## Claims

1. Device for adjusting the position of a table (2), comprising cross-shaped legs (1) having two parallel outer members (10, 11) and at least one inner member (12) extending between the outer members and crossing the latter, and means (130, 115) including a threaded hinge axle crossing the intersection of the crossed members (10, 11 ; 12) for encompassing the members to lock the legs, the two outer members (10, 11) having upper ends (104, 114) hinged to the table (2) and sliding along parallel slots (22) in the table (2), and the inner member (12) having an upper end (122) hinged to the table (2), characterized in that each of the outer (10, 11) and inner (12) members has an elongated longitudinal slot (103, 113 ; 126) slidably crossed by the hinge axle (13).

2. Device according to claim 1, characterized in that the encompassing means comprise a hand wheel (130) connected to one of the ends of the hinge axle (13) and a nut (115) screwed on the other end of the hinge axle (13).

3. Device according to claim 1 or 2, characterized in that the inner member (12) is made up of two parallel plates (120, 121) having upper (122) and lower (123) ends respectively connected thereby providing therebetween an inner slot-shaped clearance (126) for sliding the hinge axle (13).

4. Device according to claim 3, characterized in that the plates (120, 121) have their ends (122, 123) soldered to two tubes (124, 125) each adapted to be crossed by a rod (21, 33) for a hinge with respect to the table (1) or to a base member (3).

5. Device according to one of claims 1 to 4, characterized in that each of the outer members (10, 11) is made up of a plate (100, 110) perpendicular to the hinge axle (13) and forming an elongated slide.

6. Device according to claim 5, characterized in that the plates (100, 110) of the outer members (10, 11) offer outwardly extending folds (101, 111) along sloped great edges of which slide the encompassing means (130, 115).

7. Device according to claims 2 and 6, characterized in that the encompassing means comprise a strap (105) disposed between the plate of ohe (10) of the outer members and the hand wheel (130) and in that said strap (105) and said nut (115) are slidably guided along the respective folds (101, 111) of the plates (100, 110) of the outer members (10, 11).

8. Device according to claims 3 and 7, characterized in that the encompassing means comprise at each of the ends of the hinge axle (13), between parallel sloped edges of the two plates (120, 121) of said inner member (12) and the free-fold face of the plate (100, 110) of one of the outer members (10, 11), a cylinder (106, 116) such as with contact lining-shaped base and a strap (107, 117) slidably guided along said sloped edges.

9. Device according to one of claims 1 to 8, characterized in that it comprises a base member (3) and means (32, 33) for hinging lower ends (108, 118 ; 123) of the outer (10, 11) and inner (12) members with respect to the base member (3).

10. Device according to claim 9, characterized in that it comprises return spring means (4, 5) for bringing together the lower (108, 118 ; 128) or upper (104, 114 ; 122) ends of the outer members (10, 11) and the inner member (12).

11. Device according to claim 10, characterized in that the return spring means comprise at least a spring (4) anchored between the lower (108, 118 ; 123) or upper (104, 114 ; 122) ends of the outer members (10, 11) and the inner member (12).

12. Device according to claim 10, characterized in that the return spring means comprises an elastic cable that is anchored to the base member (3), in proximity to a hinge axle (33 ; 32) of the lower end (123 ; 108, 118) of the inner member (12) or the outer members (10, 11), and to the table (2), in proximity to a hinge axle (20 ; 21) of the upper end (104, 114 ; 122) of the outer members (10, 11) or the inner member (12) and that passes round the hinge axle (21, 20) of the upper end (122 ; 104, 114) of the inner member (12) or the outer members (10, 11) respectively.

13. Device according to claim 12, characterized in that the elastic cable (5) passes round of a loose pulley (6) of the corresponding hinge axle (21 ; 20) of the upper end (122 ; 104, 114) of the inner member (12) or the outer members (10, 11).

**Patentansprüche**

1. Vorrichtung zur Einstellung der Lage einer Trageplatte (2) mit einem kreuzförmigen Gestell (1) mit zwei parallelen äußeren Stützen (10, 11) und mindestens einer inneren Stütze (12), welche zwischen den äußeren Stützen angeordnet ist und dieselben kreuzt, sowie mit Mitteln (130, 115), welche zum Feststellen der Stützen und somit Verriegeln des Gestells eine Gewindestange (13) besitzen, die die Kreuzung der sich kreuzenden Stützen (10, 11 ; 12) durchsetzt wobei die beiden äußere Stützen (10, 11) an ihren oberen Enden (104, 114) gelenkig mit der Trageplatte (2) verbunden sind und in parallelen Führungsschlitzen (22) der Trageplatte längs geführt sind und wobei die innere Stütze (12) am oberen Ende (122) mit der Trageplatte (2) gelenkig verbunden ist, dadurch gekennzeichnet, daß jede der äußeren Stützen (10, 11) und die innere Stütze (12) einen langgestreckten Längsschlitz (103, 113 ; 126) besitzt, der die durchgesteckte Gewindestange (13) führt.

2. Vorrichtung nach Anspruch 1, dadurch gekennzeichnet, daß die Feststellmittel ein am einen Ende der Gewindestange (13) besfestigtes Handrad (130) und eine auf das andere Ende der Gewindestange (13) geschraubte Mutter (115) aufweisen.

3. Vorrichtung nach Anspruch 1 oder 2, dadurch gekennzeichnet, daß die innere Stütze (12) aus zwei parallelen Platten (120, 121) zusammengesetzt ist, welche an ihren oberen Enden (122) und an ihren unteren Enden (123) jewils fest miteinander verbunden sind, so daß zwischen den Platten ein Zwischenraum (126) entsteht, welcher den Führungsschlitz für die Gewindestange (13) bildet.

4. Vorrichtung nach Anspruch 3, dadurch gekennzeichnet, daß die Platten (120, 121) an ihren Enden (122, 123) auf zwei Rohre (124, 125) aufgeschweißt sind, von denen jedes zur Aufnahme einer an der Trageplatte (2) oder einer Grundplatte (3) verbundenen Gelenkachse (21, 33) geeignet ist.

5. Vorrichtung nach einem der Ansprüche 1 bis 4, dadurch gekennzeichnet, daß jeder der äußeren Stützen (10, 11) aus einer sich senkrecht zur Gewindestange (13) erstreckenden Platte (100, 110) besteht, die eine langgestreckte Führung bildet.

6. Vorrichtung nach Anspruch 5, dadurch gekennzeichnet, daß die Platten (100, 110) der äußeren Stützen (10, 11) nach außen gerichtete Winkel (101, 111) besitzen, an deren schrägen Längskanten entlang die Feststellmittel (130, 115) geführt werden.

7. Vorrichtung nach den Ansprüchen 2 und 6, dadurch gekennzeichnet, daß die Feststellmittel zwischen dem Handrad (130) und der Platte der einen äußeren Stütze (10) eine Kappe (105) besitzt und daß die Kappe (105) sowie die Mutter (115) verschiebbar auf den jeweiligen Winkeln (101, 111) der Platten (100, 110) der äußeren Stützen (10, 11) geführt werden.

8. Vorrichtung nach den Ansprüchen 3 und 7, dadurch gekennzeichnet, daß die Feststellmittel an jedem Ende der Gewindestange (13) zwischen den parallel zueinander laufenden schrägen Kanten der beiden Platten (120, 121) der inneren Stütze (12) und der glatten Fläche der Platte einer äußeren Stütze (10, 11) ein zylindrisches Paßstück (106, 116) mit einer gerundeten Anlage Stirnseite besitzt und je eine Kappe (107, 117) welche gleitend an den schrägen Kanten entlang geführt wird.

9. Vorrichtung nach einem der Ansprüche 1 bis 8, gekennzeichnet durch eine Grundplatte (3) und Formteile (32, 33), welche eine gelenkige Verbindung der unteren Enden (108, 118 ; 123) der äußeren Stützen (10, 11) und der inneren Stütze (12) mit der Grundplatte bilden.

10. Vorrichtung nach Anspruch 9, dadurch gekennzeichnet, daß sie eine elastische Rückstelleinrichtung (4, 5) besitzt um gegenseitig die unteren (108, 118 ; 123) oder oberen (104, 114 ; 122) Enden der äußeren Stützen (10, 11) und der inneren (12) Stütze zueinander hinzuziehen.

11. Vorrichtung nach Anspruch 10, dadurch gekennzeichnet, daß die elastische Rückstelleinrichtung aus mindestens einer Feder (4) besteht, die zwischen den unteren (108, 118 ; 123) oder oberen (104, 114 ; 122) Enden der äußeren (10, 11) Stützen und der inneren Stütze (12) angelenkt ist.

12. Vorrichtung nach Anspruch 10, dadurch gekennzeichnet, daß die elastische Rückstellvorrichtung aus mindestens einem Gummiseil (5) besteht, das an der Grundplatte (3) in der Nähe einer der Gelenkachsen (33 ; 32) am unteren Ende (123 ; 108, 118) entweder der inneren Stütze (12) oder der äußeren Stützen (10, 11) befestigt ist und an der Trageplatte (2) in der Nähe einer der Gelenkachsen (20 ; 21) der oberen Enden (104, 114 ; 122) der äußeren Stütze (10, 11) bzw. der inneren Stütze (12) befestigt ist und das um die Gelenkachse (21 ; 20) der oberen Enden (122 ; 104, 114) der inneren Stütze (12) bzw. der äußeren Stützen (10, 11) herumgeführt ist.

13. Vorrichtung nach Anspruch 12, dadurch gekennzeichnet, daß das Gummiseil (5) über eine drehbare Rolle (6) auf der Gelenkachse (21 ; 20) am oberen Ende (122 ; 104, 114) der inneren Stütze (12) oder der äußeren Stützen (10, 11) umgelenkt ist.

0 076 710

# FIG.1

# FIG.2

1

0 076 710

FIG.3

FIG.7

FIG.4

FIG.6

# FIG.5